# FASCICULE DE BREVET EUROPEEN

(11) **EP 3 873 724 B1**
(45) Date de publication et mention de la délivrance du brevet: **20.08.2025**
(21) Numéro de dépôt: 19795225.2
(22) Date de dépôt: 30.10.2019
(51) Int. Cl.: B29C 70/24, F01D 5/28, F01D 21/04, F02K 3/06

(54) **HYBRIDATION DES FIBRES DU RENFORT FIBREUX D'UNE AUBE DE SOUFFLANTE**
HYBRIDISIERUNG DER FASERN DER FASERVERSTÄRKUNG EINER GEBLÄSESCHAUFEL
HYBRIDIZATION OF THE FIBROUS REINFORCEMENT OF A FAN BLADE

(30) Priorité: 30.10.2018 FR 1860049
(43) Date de publication de la demande: 08.09.2021
(73) Titulaire: SAFRAN AIRCRAFT ENGINES, 75015 Paris (FR)
(72) Inventeur: DE GAILLARD, Thomas, Alain, 77550 MOISSY-CRAMAYEL (FR); GUIVARC'H, Jérémy, 77550 MOISSY-CRAMAYEL (FR); SALAS DE LOS RIOS, Paula, 77550 MOISSY-CRAMAYEL (FR)
(74) Mandataire: Regimbeau
(86) Numéro de dépôt international: PCT/EP2019/079747
(87) Numéro de publication internationale: WO 2020/089344

(56) Documents cités:
- EP-A2- 2 253 806
- WO-A1-2019/097147
- CN-B- 102 817 794
- FR-A1- 3 040 909
- FR-A1- 3 049 002

## Description

### DOMAINE DE L'INVENTION

L'invention concerne de manière générale le domaine des turbomachines, et plus particulièrement celui des aubes de soufflantes de ces turbomachines et leur procédé de fabrication.

L'invention s'applique plus particulièrement aux aubes de soufflante en matériau composite et leur interaction avec l'entrée de la veine primaire.

### ARRIERE-PLAN TECHNOLOGIQUE

Les aubes de turbomachine, et notamment les aubes de soufflante, subissent d'importantes contraintes mécaniques et thermiques et doivent satisfaire à des conditions strictes de poids et d'encombrement. Il a donc été proposé d'utiliser des aubes dans un matériau composite comportant un renfort fibreux densifié par une matrice polymère, qui sont plus légères par rapport à des aubes métalliques à caractéristiques propulsives équivalentes et qui ont une tenue à la chaleur satisfaisante.

Lors de la certification et de la vie d'un moteur, les aubes de soufflante sont soumises à des ingestions d'oiseaux et de grêlons. Toutefois, selon le type de l'objet impactant l'aube (et notamment sa taille, sa masse) et selon le type de soufflante (vitesse de rotation et nombre d'aubes), les zones privilégiées d'initiation et de propagation des endommagements sont différentes. Le comportement mécanique des aubes de soufflante est donc optimisé pendant la phase de conception des aubes pour respecter les règles de certification.

Par ailleurs, les conceptions actuelles tendent à réduire l'épaisseur de la structure en matériau composite des aubes dans les zones du bord d'attaque, du bord de fuite voire sur l'ensemble de la structure afin d'améliorer les performances aérodynamiques. A iso-matériau et iso-loi
Le document WO 2019/097147 décrit une aube conforme au préambule de la revendication 1.

### RESUME DE L'INVENTION

Un objectif de l'invention est donc de remédier aux inconvénients précités, en proposant une aube de soufflante pour une turbomachine dont le comportement à l'ingestion est amélioré.

Pour cela, l'invention propose une aube de soufflante d'une turbomachine comprenant une structure en matériau composite comprenant un renfort fibreux obtenu par tissage tridimensionnel de torons et une matrice dans laquelle est noyé le renfort fibreux,
- la structure en matériau composite comprenant un bord d'attaque et un bord de fuite,
- le renfort fibreux comprenant une première portion formant le bord d'attaque et une deuxième portion formant tout ou partie du bord de fuite,
- les torons du renfort fibreux comprenant des premiers torons présentant un allongement à la rupture prédéfini.

Par ailleurs, les torons du renfort fibreux comprennent en outre des deuxièmes torons présentant un allongement à la rupture supérieur à celui des premiers torons, la première portion comprenant tout ou partie des premiers torons tandis que la deuxième portion comprend tout ou partie des deuxièmes torons.

Certaines caractéristiques préférées mais non limitatives de l'aube décrite ci-dessus sont les suivantes, prises individuellement ou en combinaison :
- la première portion est dépourvue de deuxièmes torons et la deuxième portion comprend des torons de chaîne et des torons de trame, les torons de chaîne de ladite deuxième portion étant dépourvus de premiers torons.
- la deuxième portion s'étend depuis un sommet de l'aube.
- l'aube comprend en outre une pale à profil aérodynamique propre à s'étendre dans un flux d'air, un pied configuré pour être fixé à un disque de la soufflante et une échasse s'étendant entre le pied et la pale, et dans
- l'aube comprend en outre une pale à profil aérodynamique propre à s'étendre dans un flux d'air, un pied configuré pour être fixé à un disque de la soufflante et une échasse s'étendant entre le pied et la pale, et dans laquelle la deuxième portion forme le bord de fuite sur tout ou partie d'une hauteur de la pale.
- la deuxième portion s'étend sur au moins 35 % d'une hauteur de la pale, par exemple entre 35 % et 100 % de la hauteur de la pale.
- la deuxième portion ne comprend pas le pied.
- la deuxième portion s'étend sur une portion de longueur de corde comprise entre un centimètre et quinze centimètres.
- le renfort fibreux comprend en outre une troisième portion s'étendant entre la première portion et la deuxième portion, une densité des deuxièmes torons augmentant progressivement dans la troisième portion de la première portion vers la deuxième portion.
- la troisième portion s'étend sur une distance comprise entre 1 cm et 10 cm.
- les premiers et deuxièmes torons comprennent des torons de chaine distribués de sorte à former des colonnes de chaîne, un pourcentage, par rapport au nombre total de torons de chaîne dans une colonne de chaîne de la troisième portion, de deuxièmes torons introduits entre deux colonnes de torons de chaîne immédiatement adjacentes étant au plus égal à 30 %, et de préférence compris entre 5 % et 15 %.
- l'aube présente en outre une pluralité de plans de chaîne coupant les colonnes de chaîne, chaque plan de chaîne étant séparé d'un plan de chaîne immédiatement adjacent par une ligne de torons de trame, au plus 30 % des torons de chaîne étant modifiés entre deux plans de chaîne immédiatement adjacents dans la troisième portion qui est intermédiaire, et de préférence compris entre 5 % et 15 % des torons de chaîne.
- les premiers torons présentent un module d'Young supérieur au module d'Young des deuxièmes torons.
- l'allongement à la rupture des deuxièmes torons est compris entre 1.5 et 3 fois l'allongement à la rupture des premiers torons.
- les premiers torons comprennent des fibres de carbone ou d'aramide dont le module d'Young est supérieur à 250 GPa et l'allongement à la rupture est compris entre 1.5 % et 2.5 %.
- l'allongement à la rupture des deuxièmes torons est compris entre 3% et 6%, de préférence entre 4% et 5%.
- les deuxièmes torons comprennent des fibres de verre ou des fibres de basalte.
- les deuxièmes torons comprennent des torons de chaîne.

Selon un deuxième aspect, l'invention propose également une soufflante pour une turbomachine comprenant une pluralité d'aubes comme décrites ci-dessus.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 est une vue schématique représentant un premier exemple de renfort fibreux pour une aube de soufflante conforme à un mode de réalisation, sur laquelle l'introduction de deuxièmes torons et la sortie de premiers torons dans la portion intermédiaire ont été schématisés ainsi que trois plans de chaîne.
La figure 2 est une vue schématique représentant un deuxième exemple de renfort fibreux pour une aube de soufflante.
Les figures 3a à 3c représentent de manière schématique et partielle les trois plans de chaîne représentés sur la figure 2.

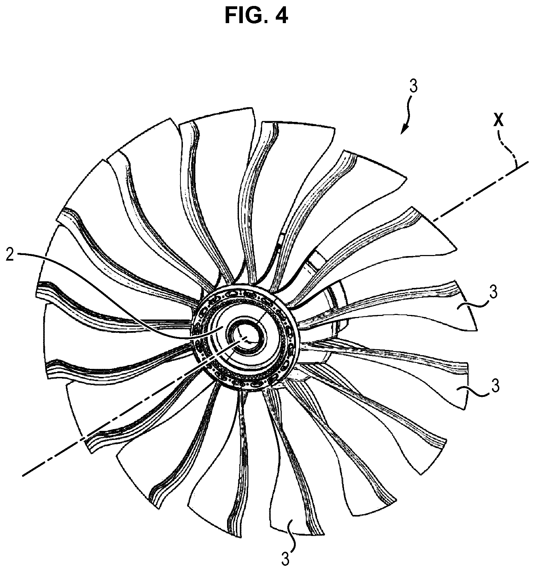

La figure 4 est une vue en perspective d'un exemple de réalisation d'une soufflante comprenant des aubes conforme à l'invention.

### DESCRIPTION DETAILLEE D'UN MODE DE REALISATION

Dans la présente demande, l'amont et l'aval sont définis par rapport au sens d'écoulement normal du gaz dans la soufflante 1 à travers la turbomachine. Par ailleurs, on appelle axe de révolution de la soufflante 1 turbomachine, l'axe X de symétrie radiale de la soufflante 1. La direction axiale correspond à la direction de l'axe X de la soufflante 1, et une direction radiale est une direction perpendiculaire à cet axe et passant par lui. Enfin, on utilisera interne et externe, respectivement, en référence à une direction radiale de sorte que la partie ou la face interne d'un élément est plus proche de l'axe X que la partie ou la face externe du même élément.

Une soufflante 1 de turbomachine comprend un disque 2 de soufflante 1 portant une pluralité d'aubes 3 de soufflante 1, associées à des plateformes inter-aubes.

Chaque aube 3 comprend une structure en matériau composite comportant un renfort fibreux 4 obtenu par tissage tridimensionnel et une matrice dans laquelle est noyé le renfort fibreux 4.

Cette structure en matériau composite comprend un pied 5, une échasse 6 et une pale 7 à profil aérodynamique. Le pied 5 est destiné à permettre la fixation de l'aube au disque 2 de soufflante et s'étend à cet effet entre un fond d'une empreinte formée dans le disque 2 et la sortie des portées de l'empreinte. La pale 7 à profil aérodynamique quant à elle est propre à être placée dans un flux d'air, lorsque la turbomachine est en fonctionnement, afin de générer une portance. Enfin, l'échasse 6 correspond à la zone de la pale 7 qui s'étend entre le pied 5 et la pale 7, c'est-à-dire entre la sortie des portées et les plateformes inter-aubes.

L'aube 3 comprend également, de manière connue en soi, un bord d'attaque 8, un bord de fuite 9, une paroi intrados et une paroi extrados. Le bord d'attaque 8 est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados et en un écoulement extrados. Le bord de fuite 9 quant à lui correspond à la partie postérieure du profil aérodynamique, où se rejoignent les écoulements intrados et extrados.

Enfin, la structure est formée d'une pluralité de sections d'aube 3 empilées depuis le pied 5 selon un axe d'empilement Z s'étendant radialement par rapport à l'axe de révolution X de la soufflante 1.

Dans ce qui suit, par « hauteur » on désignera une distance suivant l'axe d'empilement Z.

Ainsi, la pale 7 présente une hauteur h correspondant à la distance suivant l'axe d'empilement Z entre sa limite inférieure 10, à l'intersection avec l'échasse 6, et son sommet 11. La hauteur h de la pale 7 peut par exemple être mesurée à l'intersection entre le bord de fuite 9 et la limite inférieure 10 de la pale 7. La hauteur H de l'aube 3 correspond quant à elle à la distance suivant cet axe Z entre une face inférieure du pied 5 (configurée pour venir en regard du fond de l'empreinte du disque 2 de soufflante) et le sommet 11, mesuré à l'intersection entre le bord de fuite 9 et la limite inférieure 10 de la pale 7.

Le renfort fibreux 4 peut être formé à partir d'une préforme fibreuse en une seule pièce obtenue par tissage tridimensionnel ou multicouche avec épaisseur évolutive. Il comprend des torons de chaîne et de trame qui peuvent notamment comprendre des fibres en carbone, en verre, en basalte, et/ou en aramide. La matrice quant à elle est typiquement une matrice polymère, par exemple époxyde, bismaléimide ou polyimide. L'aube 3 est alors formée par moulage au moyen d'un procédé d'injection sous vide de résine du type RTM (pour « Resin Transfer Moulding), ou encore VARRTM (pour Vacuum Resin Transfer Molding).

Les torons formant le renfort fibreux 4 comprennent des premiers torons 12 présentant un allongement à la rupture prédéfini et des deuxièmes torons 14 présentant un allongement à la rupture supérieur à celui des premiers torons 12. Le renfort fibreux 4 est donc obtenu par hybridation des torons le constituant afin d'utiliser au mieux les propriétés mécaniques de chaque toron en fonction des zones de l'aube 3 et du type de sollicitation.

Les premiers torons 12 ont de préférence un module d'Young élevé, par exemple supérieur à 250 GPa, et ont pour fonction de permettre de respecter les critères de conception de l'aube 3, et notamment le statut fréquentiel de l'aube 3. Ces premiers torons 12 sont donc utilisés dans le tissage du renfort fibreux 4 pour former la portion du renfort 4 (ou première portion 13) qui comprend globalement les parties basses et épaisses de l'aube 3, pour que les fréquences propres de l'aube 3 soient élevées. Cela permet ainsi de limiter ou du moins d'éloigner les croisements fréquentiels entre les premiers modes propres de l'aube 3, énergétiques, et les harmoniques moteur. Les parties basses et épaisses comprennent ici le pied 5 de l'aube 3, l'échasse 6, une partie inférieure de la pale 7 et le bord d'attaque 8. Dans une forme de réalisation, seuls les premiers torons 12 sont utilisés comme torons de chaîne et de trame dans le tissage de la première portion 13.

Les deuxièmes torons 14 quant à eux, dont la résistance à la rupture est plus grande que celle des premiers torons 12, ont pour fonction de limiter l'initiation et la propagation des endommagements de l'aube 3 lors d'ingestion d'objets, et notamment d'oiseaux. Ces deuxièmes torons 14 sont donc utilisés dans le tissage du renfort fibreux 4 pour former la portion du renfort 4 (ou deuxième portion 15) qui comprend tout ou partie du bord de fuite 9, dans la mesure où cette zone est fortement sollicitée en cas d'ingestion d'objet. De préférence, l'allongement à la rupture des deuxièmes torons 14 est compris entre 1.5 et 3 fois l'allongement à la rupture des premiers torons 12. Dans une forme de réalisation, seuls les deuxièmes torons 14 sont utilisés comme torons de chaîne et/ou de trame dans le tissage de la deuxième portion 15.

Afin d'optimiser la résistance de l'aube 3 aux impacts d'objets, les deuxièmes torons 14 sont de torons de chaîne du renfort 4 (c'est-à-dire des torons s'étendant suivant l'axe d'empilement Z des sections d'aube 3). Par ailleurs, la deuxième portion 15 s'étend de préférence depuis une zone inférieure de l'aube 3 (qui sera détaillée par la suite de la description) jusqu'au sommet 11 de l'aube 3.

Le renfort 4 comprend en outre une portion intermédiaire 16 s'étendant entre la première portion 13 et la deuxième portion 15 qui est formée à la fois par les premiers torons 12 et les deuxièmes torons 14. Dans une forme de réalisation, seuls les premiers et deuxièmes torons 14 sont utilisés comme torons de chaîne et de trame dans le tissage de la portion intermédiaire 16.

Cette portion intermédiaire 16 est configurée pour servir d'interface entre la première portion 13 et la deuxième portion 15 afin de limiter les fragilités dues à des discontinuités de matériaux. Lorsque le renfort fibreux 4 comprend uniquement des premiers torons 12 dans la première portion 13 de l'aube 3 et uniquement des deuxièmes torons 14 dans la deuxième portion 15 de l'aube 3, et que la première portion 13 et la deuxième portion 15 sont bout à bout dans le renfort 4, l'aube 3 ainsi obtenue permet effectivement d'éviter les endommagements de l'aube 3 dans les zones comprenant les deuxièmes torons 14. Toutefois, le Demandeur s'est aperçu du fait qu'en l'absence de portion intermédiaire 16, c'est-à-dire en introduisant de manière abrupte des deuxièmes torons 14 et en supprimant simultanément les premiers torons 12 à l'interface entre la première portion 13 et la deuxième portion 15 du renfort fibreux 4, l'aube 3 obtenue risquait d'être fortement endommagée au niveau de cette interface en cas d'impact, car l'interface entre les deux portions 11, 12 du renfort 4 est fragilisée par la discontinuité forte des propriétés matériaux.

La portion intermédiaire 16 permet ainsi de faire une transition entre les propriétés matériaux de la première portion 13 et les propriétés matériaux de la deuxième portion 15. Pour cela, la densité des deuxièmes torons 14 est progressivement augmentée au sein de la portion intermédiaire 16 de la première portion 13 vers la deuxième portion 15. Plus précisément, à l'interface 14 entre la première portion 13 et la portion intermédiaire 16, la densité des deuxièmes torons 14 est très faible tandis que la densité des premiers torons 12 est très forte. En revanche, à l'interface 15 entre la portion intermédiaire 16 et la deuxième portion 15, la densité des deuxièmes torons 14 est très forte tandis que la densité des premiers torons 12 est très faible.

La deuxième portion 15 s'étend sur une portion de longueur de corde L comprise entre un centimètre et quinze centimètres en tout point de l'axe d'empilement Z de l'aube 3. Par corde, on comprendra ici, pour une section donnée de l'aube 3 (et donc pour un point donné de l'axe d'empilement Z), le segment de droite connectant le bord d'attaque 8 au bord de fuite 9 de l'aube 3.

La hauteur h' de la portion intermédiaire 16 est déterminée en fonction du dimensionnement de l'aube 3, et donc du type de soufflante 1 et plus généralement de turbomachine dans laquelle elle est destinée à être intégrée.

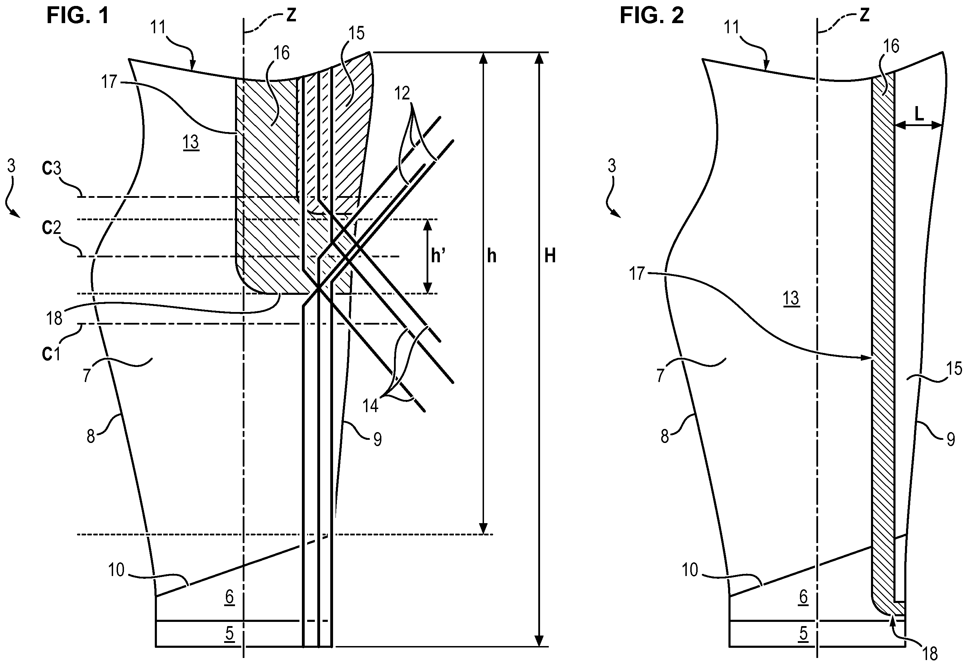

Comme indiqué précédemment, la deuxième portion 15 s'étend jusqu'au sommet 11 de l'aube 3. Idéalement, afin d'optimiser la résistance de l'aube 3 aux impacts d'oiseaux, la deuxième portion 15 s'étend sensiblement sur toute la hauteur H de l'aube 3, c'est-à-dire depuis le pied 5 de l'aube 3 ou depuis l'échasse 6 (voir figure 2) jusqu'au sommet 11, le long du bord de fuite 9.

Dans une variante de réalisation, afin de simplifier la certification de la zone pied 5/échasse 6 de l'aube 3 et pour des contraintes de fabrication, la deuxième portion 15 ne s'étend que sur une partie de la pale 7 (voir figures 1 et 2), en particulier depuis un sommet 11 de l'aube.

En particulier, dans une première forme de réalisation (voir figure 1), l'interface entre la deuxième portion 15 et la portion intermédiaire 16 peut être située à une distance (suivant l'axe d'empilement Z de l'aube 3) de la limite inférieure 10 de la pale 7 comprise entre 0 % (cas où la deuxième portion 15 s'étend sur toute la pale 7) et 65 % de la hauteur h de la pale 7. La hauteur h de la deuxième portion 15 est donc comprise entre 35 % et 100 % de la hauteur h de la pale 7.

Cette première forme de réalisation permet en effet d'améliorer le comportement du bord de fuite 9 vis-à-vis de l'ingestion de l'ensemble des types d'objets (oiseaux lourds, oiseaux de taille moyenne (medium birds en anglais) et oiseaux légers).

Dans une deuxième forme de réalisation, la distance entre la limite inférieure 10 de l'aube 3 et l'interface (suivant l'axe d'empilement Z de l'aube 3) est supérieure à 65 % de la hauteur h de la pale 7. La hauteur h de la deuxième portion 15 est donc inférieure à 35 % de la hauteur h de la pale 7.

Cette deuxième forme de réalisation permet de faciliter la fabrication et de limiter le dévrillage supplémentaire induit par le fait que les deuxièmes torons 14 présentent un plus faible module d'Young que les premiers torons 12. Toutefois, l'amélioration le comportement du bord de fuite 9 vis-à-vis de l'ingestion des d'objets du type oiseaux de taille moyenne (medium birds) et oiseaux légers est moindre en comparaison avec la première forme de réalisation.

Il en découle que le dimensionnement de l'aube 3 permet de déterminer la distance à partir de laquelle introduire des deuxièmes torons 14 dans le renfort fibreux 4, afin d'allier raideur nécessaire pour le statut fréquentiel (premiers torons 12) et allongement à rupture (deuxièmes torons 14) pour la tenue à l'ingestion.

La hauteur h' (dimension suivant l'axe d'empilement Z) de la portion intermédiaire 16 est comprise entre 5% et 30% de la hauteur h de l'aube 3. Ainsi, la hauteur h' de la portion intermédiaire 16 peut être comprise entre un centimètre et dix centimètres.

Les figures 1 et 2 représentent schématiquement une aube 3 dont le renfort fibreux 4 a été mis en forme à partir d'une préforme fibreuse tissée tridimensionnelle, avant injection de résine ou densification par une matrice et usinage éventuel, afin d'obtenir une aube 3 de soufflante 1 en matériau composite conforme à l'invention. Par tissage tridimensionnel, on comprendra que les torons de chaîne suivent des trajets sinueux afin de lier entre eux des torons de trame appartenant à des couches de torons de trame différentes exception faite de déliaisons, étant noté qu'un tissage tridimensionnel, notamment à armure interlock, peut inclure des tissages 2D en surface. Différentes armures de tissage tridimensionnel peuvent être utilisées, telles que des armures interlock, multi-satin ou multi-voile, par exemple, comme décrit notamment dans le document WO 2006/136755.

Trois plans de chaîne C1, C2, C3 ont été représentés sur la figure 1. Un plan de chaîne C1, C2, C3 est une vue en coupe de la préforme fibreuse suivant un plan normal à l'axe d'empilement Z. Dans le renfort fibreux 4, chaque plan de chaîne C1, C2, C3 est séparé du plan de chaîne immédiatement adjacent par une ligne de torons de trame.

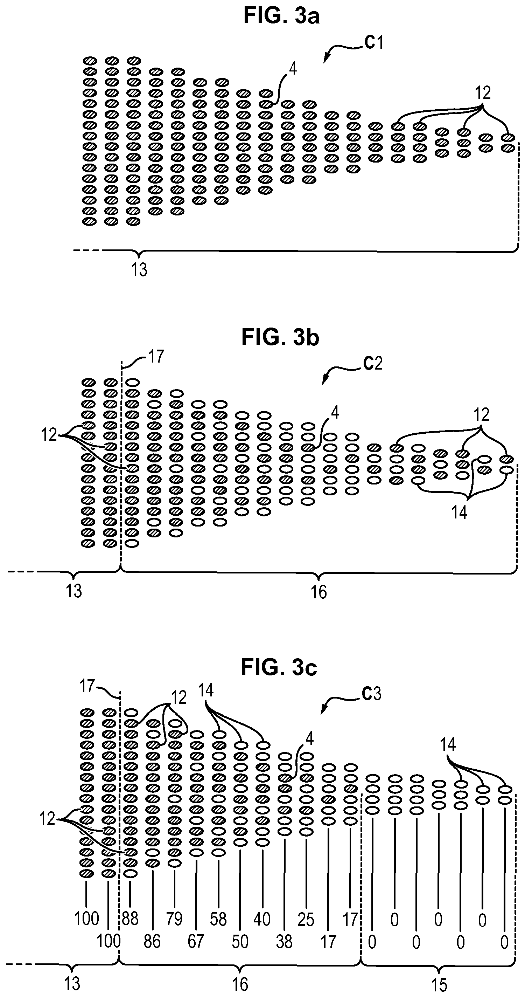

Par ailleurs, les figures 3a à 3b sont des vues du dessus des plans de chaîne C1, C2, C3 de la figure 1, dans lesquelles seuls les torons de chaîne (c'est-à-dire les torons du renfort fibreux 4 s'étendant suivant la direction d'empilement des sections) ont été représentés, les torons de trame ayant été omis afin de simplifier la lecture de la figure. Ces figures illustrent de manière schématique un exemple d'hybridation des torons par insertion des deuxièmes torons 14 en sens chaîne au niveau de l'interface verticale 17 (c'est-à-dire l'interface qui est sensiblement parallèle au bord de fuite 9) et de l'interface horizontale 18 (c'est-à-dire l'interface qui est sensiblement parallèle au pied 5 de l'aube et qui est située radialement vers l'intérieur par rapport à la portion intermédiaire 16) entre la première portion 13 et la portion intermédiaire 16.

Comme on peut le voir sur la figure 3a, le premier plan de chaîne C1, qui fait partie de la première portion 13 du renfort fibreux 4, ne comprend que des premiers torons 12.

Le deuxième plan de chaîne C2 (figure 3b) fait partie de la portion intermédiaire 16 du renfort fibreux 5, entre l'interface horizontale 18 et la première portion 13. Ce deuxième plan de chaîne C2 montre l'augmentation progressive de la densité de deuxièmes torons 14 dans la portion intermédiaire 16, à la fois entre l'interface verticale 17 et le bord de fuite 9 et entre l'interface horizontale 16 et la limite inférieure de la deuxième portion 15 (suivant la direction d'empilement Z). L'augmentation de densité de deuxièmes torons 14 depuis l'interface horizontale peut être réalisée en sortant successivement les premiers torons 12 du tissage de la préforme, au niveau des différents plans de chaîne constituant la portion intermédiaire 16, et en les coupant au niveau de la surface de la préforme avant injection, et en introduisant simultanément les deuxièmes torons 14 entre ces plans de chaîne (voir figure 1). De la sorte, la première portion 13, la deuxième portion 15 et la portion intermédiaire 16 sont formées d'une seule pièce lors du tissage.

Le troisième plan de chaîne C3 coupe la portion intermédiaire 16 et la deuxième portion 15. Ce plan C3 s'étend donc au-delà de la partie de la portion intermédiaire 16 qui est radialement à l'intérieur par rapport à la deuxième portion 15. Au niveau de ce plan de chaîne, C3, les deux premières colonnes de torons de chaîne, qui font partie de la première portion 13 du renfort fibreux 4, ne comprennent que des premiers torons 12. Ces deux premières colonnes de torons de chaîne se situent à proximité de l'interface verticale 17. La troisième et la quatrième colonne de torons de chaîne font partie de la portion intermédiaire 16 du renfort fibreux 4, à proximité de son interface verticale 17. Ces colonnes de torons de chaîne comprennent deux deuxièmes torons 14 (ce qui représente 88 % de premiers torons 12 et 12 % de deuxièmes torons 14). Les colonnes de torons de chaîne suivantes comprennent chacune un pourcentage plus important de deuxièmes torons 14 par rapport au pourcentage de premiers torons 12, jusqu'à la quatorzième colonne de torons de chaîne et les suivantes qui ne comprennent que des deuxièmes torons 14 et forment donc partie de la deuxième portion 15 du renfort 4.

De manière générale, afin d'assurer la transition des propriétés mécaniques entre la première portion 13 et la deuxième portion 15 du renfort 4 au niveau de l'interface verticale 17, le pourcentage (par rapport au nombre de torons de chaîne total de la colonne) de deuxièmes torons 14 introduits entre deux colonnes de torons de chaîne immédiatement adjacentes de la portion intermédiaire 16 est au plus égal à 30 %. De préférence, ce pourcentage est compris entre 5 % et 15 %.

Dans la partie de la portion intermédiaire qui s'étend depuis l'interface horizontale 18, au plus 30% des torons de chaîne sont modifiés entre deux plans de chaîne immédiatement adjacents (c'est-à-dire séparés par uniquement une ligne de torons de trame). Ainsi, entre deux plans de chaîne successifs (et immédiatement adjacents dans le renfort fibreux 4), au plus 30% des premiers torons 12 sont sortis de la préforme fibreuse formant le renfort fibreux 4 et découpés en surface, et autant de deuxièmes torons 14 sont introduits dans la préforme fibreuse depuis la surface afin de remplacer les premiers torons 12 sortis. De préférence, dans cette partie de la portion intermédiaire 16, entre 5 % et 15 % des torons de chaîne sont modifiés entre deux plans immédiatement adjacents.

Dans une forme de réalisation, les premiers torons 12 présentent un module d'Young E élevé, c'est-à-dire supérieur à 250 GPa, de préférence supérieur à 270 GPa. Leur allongement à la rupture A est par ailleurs compris entre 1.5% et 2.5%.

Par exemple, les premiers torons 12 peuvent comprendre des fibres de carbone, typiquement des fibres de carbone HS* T300 (E = 284 GPa, A = 1.5 %), HS TR30S (E = 356 GPa, A = 1.9 %) ou HS T700 (E = 395 GPa, A = 2.1 %) ou encore des fibres d'aramide à haut module du type Dupont Kevlar 49 (E = 302 GPa, A = 2.4 %).

Les deuxièmes torons 14 peuvent alors présenter un allongement à la rupture compris entre 3% et 6%, de préférence entre 4% et 5%. Par exemple, les deuxièmes torons 14 peuvent comprendre des fibres de verre, typiquement des fibres de verre du type E-GLASS (E = 165 GPa, A = 4.4 %) ou des fibres de verre du type S-2 GLASS (E = 267 GPa, A = 5.2 %), ou des fibres de basalte (E = 227 GPa, A = 3 %) ou encore des fibres polyester (E = 268 GPa, A = 3.5 %).

De manière générale, les configurations décrites sont valables pour des moteurs dont la soufflante peut avoir un diamètre extérieur de l'ordre de 1,8 mètre à 3 mètres. Le nombre d'aubes de la soufflante peut être égal par à 16 ou 18. Quel que soit le diamètre de la soufflante, le nombre d'aubes de soufflante sera réduit autant que possible. Parmi différents critères, un choix de paramètres (notamment de la distance h1) dépendra plus particulièrement du comportement de l'aube de soufflante et de la combinaison « fréquentielle/dimensionnement en ingestion ». En effet, pour une même cible moteur, il est possible de choisir des différentes stratégies de comportements fréquentiels ou réponses fréquentielles en différents cas d'ingestions, par exemple pour repousser les réponses d'aube et d'aubage en évitant des croisements vibratoires avec des harmoniques énergétiques du moteur. Par exemple, il est possible de faire des choix de manière à positionner ces croisements au niveau de régimes moteur transitoires.

L'hybridation des torons du renfort fibreux 4 permet en outre d'ouvrir le champ de conception grâce à l'apport supplémentaire en tenue mécanique. Par exemple, il devient possible d'affiner le profil de l'aube 3 au niveau du bord d'attaque de la préforme 4 ou du bord de fuite de la préforme 4 ou sur toute sa hauteur h en comparaison avec une aube 3 ne comprenant que des premiers torons 12 (à haut module d'Young), ce qui permet d'optimiser la masse de l'aube 3 et les performances aérodynamiques de la soufflante 1 (en obtenant des profils plus fins ou en réduisant le rapport de moyeu, qui est lié à la baisse de l'effort centrifuge induit par la masse de l'aube 3).

## Revendications

1. Aube (3) de soufflante (1) d'une turbomachine comprenant une structure en matériau composite comprenant un renfort fibreux (4) obtenu par tissage tridimensionnel de torons et une matrice dans laquelle est noyé le renfort fibreux (4),
- la structure en matériau composite comprenant un bord d'attaque (8) et un bord de fuite (9),
- le renfort fibreux (4) comprenant une première portion (13) formant le bord d'attaque (8) et une deuxième portion (15) formant tout ou partie du bord de fuite (9),
- les torons du renfort fibreux (4) comprenant des premiers torons (12) présentant un allongement à la rupture prédéfini,
l'aube (3) étant **caractérisée en ce que** les torons du renfort fibreux (4) comprennent en outre des deuxièmes torons (14) présentant un allongement à la rupture supérieur à celui des premiers torons (12), **en ce que** la première portion (13) comprend tout ou partie des premiers torons (12) tandis que la deuxième portion (15) comprend tout ou partie des deuxièmes torons (14) et **en ce que** la première portion (13) est dépourvue de deuxièmes torons (14).

2. Aube (3) selon la revendication 1, dans laquelle la deuxième portion (15) comprend des torons de chaîne et des torons de trame, les torons de chaîne de ladite deuxième portion (15) étant dépourvus de premiers torons (12).

3. Aube selon l'une des revendications 1 ou 2, dans laquelle la deuxième portion (15) s'étend depuis un sommet (11) de l'aube.

4. Aube (3) selon l'une des revendications 1 à 3, dans laquelle l'aube comprend en outre une pale (7) à profil aérodynamique propre à s'étendre dans un flux d'air, un pied (5) configuré pour être fixé à un disque (2) de la soufflante et une échasse (6) s'étendant entre le pied (5) et la pale (7), et dans laquelle la deuxième portion (15) forme le bord de fuite (9) sur tout ou partie d'une hauteur (h) de la pale (7), la deuxième portion (15) pouvant s'étendre sur au moins 35 % d'une hauteur (h) de la pale (7), par exemple entre 35 % et 100 % de la hauteur (h) de la pale (7).

5. Aube selon la revendication 4, dans laquelle la deuxième portion (15) peut ne pas comprendre le pied (5).

6. Aube selon l'une des revendications 1 à 5, dans laquelle la deuxième portion (15) s'étend sur une portion de longueur (L) de corde comprise entre un centimètre et quinze centimètres.

7. Aube (3) selon l'une des revendications 1 à 6, dans laquelle le renfort fibreux (4) comprend en outre une troisième portion (16) s'étendant entre la première portion (13) et la deuxième portion (15), une densité des deuxièmes torons (14) augmentant progressivement dans la troisième portion (16) de la première portion (13) vers la deuxième portion (15), la troisième portion (16) pouvant s'étendre sur une distance comprise entre 1 cm et 10 cm.

8. Aube (3) selon la revendication 7, dans laquelle les premiers et deuxièmes torons (12, 14) comprennent des torons de chaine distribués de sorte à former des colonnes de chaîne, un pourcentage, par rapport au nombre total de torons de chaîne dans une colonne de chaîne de la troisième portion (16), de deuxièmes torons (14) introduits entre deux colonnes de torons de chaîne immédiatement adjacentes étant au plus égal à 30 %, et de préférence compris entre 5 % et 15 %.

9. Aube selon la revendication 8, présentant en outre une pluralité de plans de chaîne (C1, C2, C3) coupant les colonnes de chaîne, chaque plan de chaîne étant séparé d'un plan de chaîne immédiatement adjacent par une ligne de torons de trame, au plus 30 % des torons de chaîne étant modifiés entre deux plans de chaîne immédiatement adjacents dans la troisième portion qui est intermédiaire (16), et de préférence compris entre 5 % et 15 % des torons de chaîne.

10. Aube (3) selon l'une des revendications 1 à 9, dans laquelle les premiers torons (12) présentent un module d'Young supérieur au module d'Young des deuxièmes torons (14).

11. Aube (3) selon l'une des revendications 1 à 10, dans laquelle l'allongement à la rupture des deuxièmes torons (14) est compris entre 1.5 et 3 fois l'allongement à la rupture des premiers torons (12).

12. Aube (3) selon l'une des revendications 1 à 11, dans laquelle :
- les premiers torons (12) comprennent des fibres de carbone ou d'aramide dont le module d'Young est supérieur à 250 GPa et l'allongement à la rupture est compris entre 1.5 % et 2.5 %, et/ou
- l'allongement à la rupture des deuxièmes torons (14) est compris entre 3% et 6%, de préférence entre 4% et 5%.

13. Aube (3) selon la revendication 12, dans laquelle les deuxièmes torons (14) comprennent des fibres de verre ou des fibres de basalte.

14. Aube (3) selon l'une des revendications 1 à 13, dans laquelle les deuxièmes torons (14) comprennent des torons de chaîne.

15. Soufflante (1) pour une turbomachine comprenant une pluralité d'aubes (3) conformes à l'une des revendications 1 à 14.

## Patentansprüche

1. Schaufel (3) des Gebläses (1) einer Turbomaschine, umfassend eine Struktur aus Verbundwerkstoff, die eine Faserverstärkung (4) umfasst, die durch dreidimensionales Weben von Litzen erhalten wird, und eine Matrix, in die die Faserverstärkung (4) eingebettet ist,
- wobei die Struktur aus Verbundwerkstoff eine Vorderkante (8) und eine Hinterkante (9) umfasst,
- wobei die Faserverstärkung (4) einen ersten Abschnitt (13), der die Vorderkante (8) bildet, und einen zweiten Abschnitt (15) aufweist, der ganz oder teilweise die Hinterkante (9) bildet,
- wobei die Litzen der Faserverstärkung (4) erste Litzen (12) umfassen, die eine vordefinierte Bruchdehnung aufweisen,
wobei die Schaufel (3) **dadurch gekennzeichnet ist, dass** die Litzen der Faserverstärkung (4) ferner zweite Litzen (14) umfassen, die eine Bruchdehnung aufweisen, die größer ist als die der ersten Litzen (12), dass der erste Abschnitt (13) alle oder einen Teil der ersten Litzen (12) umfasst, während der zweite Abschnitt (15) alle oder einen Teil der zweiten Litzen (14) umfasst und dass der erste Abschnitt (13) keine zweiten Litzen (14) aufweist.

2. Schaufel (3) nach Anspruch 1, wobei der zweite Abschnitt (15) Kettlitzen und Schusslitzen umfasst, wobei die Kettlitzen des zweiten Abschnitts (15) keine ersten Litzen (12) aufweisen.

3. Schaufel nach einem der Ansprüche 1 oder 2, wobei sich der zweite Abschnitt (15) ab einem Scheitelpunkt (11) der Schaufel erstreckt.

4. Schaufel (3) nach einem der Ansprüche 1 bis 3, wobei die Schaufel ferner ein Blatt (7) mit aerodynamischem Profil, das imstande ist, sich in einen Luftstrom zu erstrecken, einen Fuß (5), der zur Befestigung an einer Scheibe (2) des Gebläses ausgelegt ist, und einen sich zwischen dem Fuß (5) und dem Blatt (7) erstreckenden Steg (6) umfasst, und wobei der zweite Abschnitt (15) die Hinterkante (9) über die gesamte oder einen Teil der Höhe (h) des Blatts (7) bildet, wobei sich der zweite Abschnitt (15) über mindestens 35% einer Höhe (h) des Blatts (7), beispielsweise zwischen 35% und 100% der Höhe (h) des Blatts (7), erstrecken kann.

5. Schaufel nach Anspruch 4, wobei der zweite Abschnitt (15) den Fuß (5) nicht umfassen kann.

6. Schaufel nach einem der Ansprüche 1 bis 5, wobei sich der zweite Abschnitt (15) über einen Sehnenlängenabschnitt (L) zwischen einem Zentimeter und fünfzehn Zentimetern erstreckt.

7. Schaufel (3) nach einem der Ansprüche 1 bis 6, wobei die Faserverstärkung (4) ferner einen dritten Abschnitt (16) umfasst, der sich zwischen dem ersten Abschnitt (13) und dem zweiten Abschnitt (15) erstreckt, wobei eine Dichte der zweiten Litzen (14) im dritten Abschnitt (16) vom ersten Abschnitt (13) zum zweiten Abschnitt (15) allmählich zunimmt, wobei sich der dritte Abschnitt (16) über einen Abstand zwischen 1 cm und 10 cm erstrecken kann.

8. Schaufel (3) nach Anspruch 7, wobei die ersten und zweiten Litzen (12, 14) Kettlitzen umfassen, die derart verteilt sind, dass sie Kettsäulen bilden, wobei, bezogen auf die Gesamtzahl der Kettlitzen in einer Kettsäule des dritten Abschnitts (16), ein Prozentsatz zweiter Litzen (14), die zwischen zwei unmittelbar benachbarten Kettlitzen-Säulen eingesetzt sind, höchstens 30% beträgt und vorzugsweise zwischen 5% und 15% liegt.

9. Schaufel nach Anspruch 8, die ferner eine Vielzahl von Kettebenen (C1, C2, C3) aufweist, die die Kettsäulen schneiden, wobei jede Kettebene von einer unmittelbar benachbarten Kettebene durch eine Schusslitzenzeile getrennt ist, wobei höchstens 30% der Kettlitzen zwischen zwei unmittelbar benachbarten Kettebenen im mittleren dritten Abschnitt (16) und vorzugsweise zwischen 5% und 15% der Kettlitzen verändert sind.

10. Schaufel (3) nach einem der Ansprüche 1 bis 9, wobei die ersten Litzen (12) ein Young-Modul aufweisen, das größer ist als das Young-Modul der zweiten Litzen (14).

11. Schaufel (3) nach einem der Ansprüche 1 bis 10, wobei die Bruchdehnung der zweiten Litzen (14) zwischen dem 1,5- und 3-fachen der Bruchdehnung der ersten Litzen (12) liegt.

12. Schaufel (3) nach einem der Ansprüche 1 bis 11, wobei:
- die ersten Litzen (12) Kohlenstoff- oder Aramidfasern umfassen, deren Young-Modul größer als 250 GPa ist und deren Bruchdehnung zwischen 1,5% und 2,5% liegt, und/oder
- die Bruchdehnung der zweiten Litzen (14) zwischen 3% und 6%, vorzugsweise zwischen 4% und 5%, liegt.

13. Schaufel (3) nach Anspruch 12, wobei die zweiten Litzen (14) Glasfasern oder Basaltfasern umfassen.

14. Schaufel (3) nach einem der Ansprüche 1 bis 13, wobei die zweiten Litzen (14) Kettlitzen umfassen.

15. Gebläse (1) für eine Turbomaschine, das eine Vielzahl von Schaufeln (3) nach einem der Ansprüche 1 bis 14 umfasst.

## Claims

1. A blade (3) of a fan (1) of a gas turbine engine comprising a composite material structure comprising a fibrous reinforcement (4) obtained by three-dimensional weaving of strands and a matrix in which the fibrous reinforcement (4) is embedded,
- the composite material structure comprising a leading edge (8) and a trailing edge (9),
- the fibrous reinforcement (4) comprising a first portion (13) forming the leading edge (8) and a second portion (15) forming all or part of the trailing edge (9),
- the strands of the fibrous reinforcement (4) comprising first strands (12) having a predefined elongation at break,
the blade (3) being **characterized in that** the strands of the fibrous reinforcement (4) further comprise second strands (14) having a higher elongation at break than that of the first strands (12), **in that** the first portion (13) comprises all or part of the first strands (12) while the second portion (15) comprises all or part of the second strands (14), and **in that** the first portion (13) is devoid of second strands (14).

2. The blade (3) as claimed in claim 1, wherein the second portion (15) comprises warp strands and weft strands, the warp strands of said second portion (15) being devoid of first strands (12).

3. The blade as claimed in one of claims 1 or 2, wherein the second portion (15) extends from a tip (11) of the blade.

4. The blade (3) as claimed in one of claims 1 to 3, wherein the blade further comprises an airfoil (7) having an aerodynamic profile suitable for extending into an air stream, a root (5) configured to be fixed to a disk (2) of the fan and a shank (6) extending between the root (5) and the airfoil (7), and wherein the second portion (15) forms the trailing edge (9) over all or part of a height (h) of the airfoil (7), wherein the second portion (15) may extend over at least 35% of a height (h) of the airfoil (7), for example between 35% and 100% of the height (h) of the airfoil (7).

5. The blade as claimed in 4, wherein the second portion (15) may not comprise the root (5).

6. The blade as claimed in one of claims 1 to 5, wherein the second portion (15) extends over a portion of chord length (L) comprised between one centimeter and fifteen centimeters.

7. The blade (3) as claimed in one of claims 1 to 6, wherein the fibrous reinforcement (4) further comprises a third portion (16) extending between the first portion (13) and the second portion (15), a density of the second strands (14) progressively increasing in the third portion (16) from the first portion (13) toward the second portion (15), wherein the third portion (16) may extend over a distance comprised between 1 cm and 10 cm.

8. The blade (3) as claimed in claim 7, wherein the first and second strands (12, 14) comprise warp strands distributed so as to form warp columns, a percentage, based on the total number of warp strands in a warp column of the third portion (16), of second strands (14) inserted between two immediately adjacent columns of warp strands being at most equal to 30%, and preferably comprised between 5% and 15%.

9. The blade as claimed in claim 8, further comprising a plurality of warp planes (C1, C2, C3) intersecting the warp columns, each warp plane being separated from an immediately adjacent warp plane by a line of weft strands, with no more than 30% of the warp strands being modified between two immediately adjacent warp planes in the third portion that is intermediate (16), and preferably comprised between 5% and 15% of the warp strands.

10. The blade (3) as claimed in one of claims 1 to 9, wherein the first strands (12) have a higher Young modulus than the Young modulus of the second strands (14).

11. The blade (3) as claimed in one of claims 1 to 10, wherein the elongation at break of the second strands (14) is comprised between 1.5 and 3 times the elongation at break of the first strands (12).

12. The blade (3) as claimed in one of claims 1 to 11, wherein:
- the first strands (12) comprise carbon or aramid fibers whose Young modulus is greater than 250 GPa and whose elongation at break is comprised between 1.5% and 2.5%, and/or
- the elongation at break of the second strands (14) is comprised between 3% and 6%, preferably between 4% and 5%.

13. The blade (3) as claimed in claim 12, wherein the second strands (14) comprise glass fibers or basalt fibers.

14. The blade (3) as claimed in one of claims 1 to 13, wherein the second strands (14) comprise warp strands.

15. A fan (1) for a gas turbine engine comprising a plurality of blades (3) as claimed in one of claims 1 to 14.
